# EUROPEAN PATENT SPECIFICATION

(11) **EP 4 083 684 B1**
(45) Date of publication and mention of the grant of the patent: **10.09.2025**
(21) Application number: 21171336.7
(22) Date of filing: 29.04.2021
(51) Int. Cl.: G01B 11/00, G02B 27/32, G02B 27/00, G02B 21/36, G02B 21/26, G06T 7/73

(54) **METHOD FOR OPTICALLY EVALUATING AN OPERATING ACCURACY OF A DIGITAL MICROSCOPE, METHOD FOR CONTROLLING A MOVABLE TABLE OF A DIGITAL MICROSCOPE, AND PHOTO MASK FOR OPTICALLY EVALUATING AN OPERATING ACCURACY OF A DIGITAL MICROSCOPE**
VERFAHREN ZUR OPTISCHEN AUSWERTUNG DER BETRIEBSGENAUIGKEIT EINES DIGITALEN MIKROSKOPS, VERFAHREN ZUR STEUERUNG EINES BEWEGLICHEN TISCHES EINES DIGITALEN MIKROSKOPS UND FOTOMASKE ZUR OPTISCHEN AUSWERTUNG DER BETRIEBSGENAUIGKEIT EINES DIGITALEN MIKROSKOPS
PROCÉDÉ D'ÉVALUATION OPTIQUE DE LA PRÉCISION DE FONCTIONNEMENT D'UN MICROSCOPE NUMÉRIQUE, PROCÉDÉ DE COMMANDE D'UNE TABLE MOBILE D'UN MICROSCOPE NUMÉRIQUE ET PHOTOMASQUE POUR L'ÉVALUATION OPTIQUE DE LA PRÉCISION DE FONCTIONNEMENT D'UN MICROSCOPE NUMÉRIQUE

(43) Date of publication of application: 02.11.2022
(73) Proprietor: PreciPoint GmbH, 85354 Freising (DE)
(72) Inventor: Müller, Fritz, 80999 München (DE); Müller, Johannes, 4056 Basel (CH); Bauer, Josef, 85354 Freising (DE)
(74) Representative: Schmitt-Nilson Schraud Waibel Wohlfrom Patentanwälte Partnerschaft mbB

(56) References cited:
- B ATCHESON ET AL: "CALTag: High Precision Fiducial Markers For Camera Calibration", 15TH INTERNATIONAL WORKSHOP ON VISION, MODELING AND VISUALIZATION, 15 November 2010 (2010-11-15), XP055004316, Retrieved from the Internet <URL:http://www.cs.ubc.ca/nest/imager/tr/2010/Atcheson_VMV2010_CALTag/files/caltag.pdf> [retrieved on 20110808]
- ARTUR SAGITOV ET AL: "ARTag, AprilTag and CALTag Fiducial Marker Systems: Comparison in a Presence of Partial Marker Occlusion and Rotation :", PROCEEDINGS OF THE 14TH INTERNATIONAL CONFERENCE ON INFORMATICS IN CONTROL, AUTOMATION AND ROBOTICS, 1 January 2017 (2017-01-01), pages 182 - 191, XP055590736, ISBN: 978-989-7582-64-6, DOI: 10.5220/0006478901820191
- PHOTOMASKPORTAL: "Mask Terminology - PHOTOMASK PORTAL", 11 April 2021 (2021-04-11), XP055851176, Retrieved from the Internet <URL:https://web.archive.org/web/20210411190242/https://www.photomaskportal.com/terminology.html> [retrieved on 20211013]
- SHERIFF J ET AL: "Computer-readable Image Markers for Automated Registration in Correlative Microscopy autoCRIM", ARXIV.ORG, CORNELL UNIVERSITY LIBRARY, 201 OLIN LIBRARY CORNELL UNIVERSITY ITHACA, NY 14853, 13 November 2020 (2020-11-13), XP081824985

## Description

The present invention is in the field of digital microscopy. In particular, the present invention is in the field of evaluating the operating accuracy of digital microscopes.

Recent advances in technology aim at replacing conventional analog microscopes with digital microscopes. Digital microscopes are highly complex technical systems. An illumination assembly, a movable table, an optical assembly for magnification, and a digital camera are arranged to co-operate for providing digital images of a specimen / sample that is arranged on the movable table of the digital microscope. The desire to analzye a specimen / sample in detail is inherent to the field of microscopy. Accordingly, there is a desire for providing high and predictable quality of the digital images taken of the specimen / sample. In a common operating scenario of a digital microscope, a specimen / sample may be scanned by taking many individual images of individual portions of the specimen / sample and by assembling the individual images into a desired full image of the specimen / sample. Especially for such scanning operations, a precise and reliable operation of the digital microscope is desirable. Current methods and tools for evaluating the operating accuracy of digital microscopes are not always satisfactory.

B Atcheson et al: "CALTag. High Precision Fiducial Markers for Camera Calibration", 15th International Workshop on Vision, Modeling and Visualization, 25 November 2010, discloses a self-identifying marker pattern for camera calibration, which comprises a black and white checkerboard layout and in which each of the checkerboard fields is provided with an M x N matrix of black and white squares that represent a binary marker design.

Artur Sagitov et al: "ARTag, AprilTag and CALTag Fiducial Marker Systems: Comparison in a Presence of Partial Marker Occlusion and Rotation", Proceedings of the 14th International Conference on Informatics in Control, Automation and Robotics, January 1, 2017, compares different fiducial marker designs.

It would be beneficial to provide a method and a tool for optically evaluating an operating accuracy of a digital microscope that allow for providing highly reliable evaluation results.

Exemplary embodiments of the invention include a method for optically evaluating an operating accuracy of a digital microscope in accordance with claim 1 and a photo mask for use in a method for optically evaluating an operating accuracy of a digital microscope in accordance with claim 13. Further embodiments of the invention are given in the dependent claims.

Exemplary embodiments of the invention allow for establishing a highly accurate correspondence between an absolute position within the photo mask and a specific location within the digital image. With the photo mask being placed on the movable table of the digital microscope, said highly accurate correspondence between the absolute position within the photo mask and the specific location within the digital image may be used for drawing conclusions regarding the operating accuracy of the digital microscope in a highly accurate manner. In particular, correspondences between absolute positions within the mask and specific locations within the digital image may be used as basic data for the operating behaviour in the microscope frame of reference. The photo mask may be seen as a highly accurate tool for establishing a correspondence between what is happening in the analog portion of the digital microscope, i.e. in the mechanical and optical set-up of the digital microscope, and what arrives in the digital portion of the microscope, i.e. in the digital image taken with the digital camera of the digital microscope.

The method comprises placing the photo mask on the movable table of the digital microscope. The photo mask is a device that has light transmissive portions and light blocking portions. On the movable table of the digital microscope, the photo mask may be placed in the optical path from the illumination assembly to the digital camera of the digital microscope. Having light transmissive portions and light blocking portions, the photo mask being placed on the movable table results in the digital image replicating whatever pattern is present on the photo mask. When being illuminated with white light and when having broad band light transmissive properties in the light transmissive portions, the pattern of the photo mask may be replicated as a a gray scale image by the digital camera. A high contrast picture of the photo mask may be generated, which may help in carrying out high precision image processing of the images replicating the photo mask pattern.

The photo mask comprises an orthogonal grid of line structures, forming a two-dimensional array of photo mask subfields, and a plurality of unique subfield identifiers, provided in at least a subset of the two-dimensional array of photo mask subfields. With the orthogonal grid of line structures and the plurality of unique subfield identifiers, two different means for position detection within the photo mask are provided. Said two different means are complimentary for determining an absolute position within the photo mask, as they allow for a highly accurate relating of the specific location within the digital image to the orthogonal grid of line structures on the one hand and allow for a unique identification of the portion of the photo mask that is present in the digital image via the unique subfield identifiers on the other hand. Due to its highly regular nature and its high degree of re-petitiveness, the orthogonal grid of line structures is very well-suited for being detected in a highly accurate and reliable manner within the digital image. In addition, the unique subfield identifiers allow for reliably distinguishing different portions of the photo mask. A reliable determination of the particular portion of the photo mask that is present in the digital image may be combined with a highly accurate determination of the relative position of the orthogonal grid of line structures in the digital image. The relative position of the orthogonal grid of line structures in the digital image may be determined as the relative position with respect to any specific location within the digital image, such as the relative position of the orthogonal grid of line structures with respect to an image corner or an image edge or the image center or any other suitable reference point / reference line / reference structure.

According to a further embodiment, each of the two-dimensional array of photo mask subfields is provided with a unique subfield identifier. In that way, the portion of the photo mask that is visible in the digital image may be identified via any given photo mask subfield. This in turn may allow for determining the depicted portion of the photo mask by always checking a specific position within the digital image, such as always analyzing the photo mask subfield in the center of the digital image or the photo mask subfield in the top left corner of the digital image, etc..

According to a further embodiment, the unique subfield identifiers comprise one-dimensional bar code identifiers and/or matrix bar code identifiers and/or alphanumerical identifiers. The matrix bar code identifiers may for example be QR codes. Matrix bar code identifiers may be analyzed in any suitable manner, such as via determining vertical and horizontal check sums over a matrix bar code identifier.

As compared to matrix bar code identifiers, the term one-dimensional bar code identifier refers to bar code identifiers that encode the identification information in one dimension. This does not exclude that the one-dimensional bar code identifier has an overall two-dimensional extension, such as known from traditional bar codes. The alphanumerical identifiers may contain any suitable kind of characters, such as Arabic numbers, Roman characters, etc..

According to a further embodiment, said determining of the relative position of the orthogonal grid of line structures comprises edge detection with respect to at least part of the orthogonal grid of line structures in the digital image of the portion of the photo mask. Edge detection is a powerful tool for accurately and reliably determining the line structures of the orthogonal grid. In this way, the relative position of the orthogonal grid of line structures with respect to the portion of the photo mask, contained in the digital image, may be determined with high accuracy and reliability. Also, many readily implemented algorithms for edge detection exist in image processing. The determining of the relative position of the orthogonal grid of line structures may be implemented via known generic edge detection algorithms or via algorithmic implementations targeted at the grid detection at issue here.

According to a further embodiment, said determining of the relative position of the orthogonal grid of line structures comprises sub-pixel edge detection in the digital image of the portion of the photo mask. By using sub-pixel edge detection, which is per se known in image processing, the relative position of the orthogonal grid of line structures within the digital image can be determined with an even higher accuracy than the pixel size of the digital camera. In this way, the evaluating of the operating accuracy of the digital microscope may be increased even further.

According to a further embodiment, said determining of the relative position of the orthogonal grid of line structures comprises analyzing a section of the digital image that contains 1 photo mask subfield, in particular a 1x1 window of photo mask subfields, or 9 photo mask subfields, in particular a 3x3 window of photo mask subfields, or 25 photo mask subfields, in particular a 5x5 window of photo mask subfields, or 49 photo mask subfields, in particular a 7x7 window of photo mask subfields, or 81 photo mask subfields, in particular a 9x9 window of photo mask subfields. By looking at the line structure around a single photo mask subfield only, a very quick determination of an absolute position within the photo mask for a specific location within the digital image may be achieved. When looking at the line structures for a higher number of photo mask subfields, potential inaccuracies in the determining of the relative position of the orthogonal grid of line structures in the digital image may be detected and/or evened out over the plurality of photo mask subfields considered. For example, when considering the line structures around 9 photo mask subfields, 9 measurements between the specific location within the digital image and particular locations in the 9 photo mask subfields, such as the 9 top left corners of the photo mask subfields, may be made. Knowing that the 9 top left corners of the photo mask subfields have a set distance from each other, measurement inaccuracies may be detected and/or compensated. For example, non-plausible measurement outliers may be disregarded and/or measurement values may be averaged and/or a median of measurement values may be considered to be the most accurate measurement. By using odd numbers for the dimensions of the window sizes for the photo mask subfields, it may ensured that the photo mask subfield at the center of the digital image is looked at and that uniform numbers of photo mask subfields in all dimensions around the center of the digital image are looked at. This may lead to a particularly high quality of measurement results, because the optics of a digital microscope tend to have the highest accuracy in the center of the optical path from the table to the digital camera. The number of photo mask subfields used for a particular evaluating scenario may depend on the size of the photo mask subfields of the particular photo mask, on the magnification level currently in use by the digital microscope, the desire for accuracy in measurements, the desire for quick processing times for the evaluation, etc.. For example, while the method may analyze 9 photos mask subfields, in case a 10x magnification microscope objective is used, the method may analyze 1 photo mask subfield, in case a 50x magnification microscope objective is used.

According to a further embodiment, the photo mask is a chrome-coated photo mask. A chrome-coated photo mask may have high stability and low temperature sensitivity and may, thus, be well-suited for ensuring a high measurement accuracy over a wide range of evaluating scenarios. The base material of the chrome-coated photo mask may be quartz-based, such as quartz glass, or another suitable material. Quartz or other materials with a similar or lower thermal expansion coefficient have been found to work well with the chrome coating and support the high measurement accuracy over a wide range of evaluating scenarios. The orthogonal grid of line structures and the unique subfield identifiers may be free of coating and the rest of the photo mask may be coated. It is also possible that the orthogonal grid of line structures and the unique subfield identifiers are coated portions of the photo mask and the rest of the photo mask is free of coating. The combination of quartz glass as base material and chrome as coating material may allow for the provision of a photo mask that has high accuracy, high temperature stability, and comparably low production cost.

According to a further embodiment, the photo mask has production tolerances of less than 100 nm, in particular production tolerances of less than 50 nm. In this way, the production tolerances and, thus, the inherent inaccuracies of the photo mask may be so small that they do not have a negative impact on the measurement accuracy provided via the digital image of the photo mask. In other words, the production tolerances may be so low that they cannot be captured with the digital camera of the digital microscope, at least not for currently available microscope optics and pixel densities of digital cameras. Accordingly, the production tolerances of the photo mask do not pose a constraint in evaluating the operating accuracy of the digital microscope and, thus, support extremely high accuracy at the measurement source.

According to a further embodiment, all photo mask subfields of the two-dimensional array of the photo mask subfields have the same size.

According to a further embodiment, the photo mask subfields have a size of between 100 µm x 100 µm and 300 µm x 300 µm, in particular of between 150 µm x 150 µm and 250 µm x 250 µm. These sizes for the photo mask subfields have been found to provide a good compromise between photo mask area spent on the photo mask subfields and photo mask area spent on the orthogonal grid of line structures. They therefore contribute to a good sharing of photo mask area between the two complimentary detection means, described above. It is understood that the size values for the photo mask subfields are exemplary only and may be adapted, in particular depending on the properties of the digital microscope, such as the magnification level and the pixel density / number of the digital camera, and/or depending on the extensions of the unique subfield identifiers and their requirements for reliable identification.

According to a further embodiment, the line structures of the orthogonal grid of line structures have a width of between 10 µm and 30 µm, in particular a width of between 15 µm and 25 µm, further in particular a width of 20 µm. These widths of the lines structures have been found to provide a good compromise between photo mask area spent on the photo mask subfields and photo mask area spent on the orthogonal grid of line structures. They therefore contribute to a good sharing of photo mask area between the two complimentary detection means, described above. It is understood that the widths for the line structures are exemplary only and may be adapted, in particular depending on the properties of the digital microscope, such as the magnification level and the pixel density / number of the digital camera.

According to a further embodiment, the photo mask has a size of between 10 cm x 10 cm and 20 cm x 20 cm, in particular a size of between 12 cm x 12 cm and 16 cm x 16 cm, further in particular a size of 14 cm x 14 cm. With these dimensions, the photo mask has been found to be well-placeable on the movable tables of a wide range of digital microscopes, while allowing for an extensive evaluation of the operating accuracy of the digital microscope across large portions of the movable tables, without having to be re-positioned.

According to the invention, the method comprises using said absolute position within the photo mask, determined for the specific location within the digital image, for evaluating a positioning accuracy of the movable table in an x/y plane. In further embodiments, said absolute position is used for at least one of: evaluating a distance accuracy between the movable table and the digital camera in a z-direction; evaluating a position accuracy of an optical z-axis from the movable table to the digital camera with respect to the x/y plane; evaluating a pixel density of the digital camera; evaluating a magnification accuracy of the digital microscope; evaluating a temperature sensitivity of the digital microscope; evaluating a distortion of the digital microscope. For all of these ways of evaluating the operating accuracy of the digital microscope, the determined absolute position within the photo mask for the specific location within the digital image is a valuable input. Via the absolute position within the photo mask, a correspondence between the digital image and the microscope frame of reference may be achieved. Said correspondence may be beneficially used in all of the mentioned ways of evaluating particular operating characteristics of the digital microscope. The term x/y plane refers to the plane spanned by the movable table and forming the base for placing a specimen / sample on the movable table. In a normal operating position of the digital microscope, the x/y plane is substantially horizontal. The term z-direction relates to a direction perpendicular to the x/y plane. The z-direction corresponds to the optical path from the illumination assembly through the movable table, through the optical system, and to the digital camera of the digital microscope.

According to a further embodiment, the method further comprises: determining an operating position of the movable table, using said absolute position within the photo mask, determined for the specific location within the digital image, and comparing said operating position with an expected position of the movable table, as expected from a controlled mechanical positioning of the movable table via a table drive assembly and/or as expected from at least one length measurement system of the movable table. In this way, the positioning accuracy of the movable table in the x/y plane, as expected from the controlled positioning of the movable table via the table drive assembly and/or as expected from an independent positioning sensor system of the movable table, may be checked / validated via the measurements taken with the help of the photo mask. In this way, the actuator accuracy of the table drive assembly and/or the sensor accuracy of the length measurement system(s) of the movable table may be evaluated. This procedure may be used in quality control, such as during the manufacture of a digital microscope, and/or during maintenance / repair of a digital microscope. In this way, maintenance / repair / replacement of the table drive assembly and/or of the length measurement system(s) of the movable table may be accurately and reliably indicated and may be accurately and reliably carried out. In particular, the method may help in determining whether the motors and/or the spindles of the motors and/or the shafts of the motors and/or the guide elements of the table drive assembly are within production tolerances or whether the table drive assembly does not meet desired / required specifications. It is also possible that the method helps in determining whether the x- and y-axes of the movable table are sufficiently orthogonal for the desired / required specifications. In other words, angular errors between the moving directions in the x- and y-dimension of the movable table may be detected.

According to the invention, at least the steps of taking digital image of a portion of the photo mask, determining a relative position of the orthogonal grid of line structures, analyzing at least one unique subfield identifier, and determining an absolute position within the photo mask for a specific location within the digital image are carried out in a plurality of iterations for a plurality of evaluation scenarios. In this way, the relative behaviour of the digital microscope between two evaluation scenarios may be examined. For example, in case the movable table is controlled to move a certain distance, such as 2 mm, in a certain direction, such as in the x-direction, the accuracy of said controlled moving distance may be checked via two instances of determining absolute positions within the photo mask for specific locations within two digital images. The photo mask is an absolute measurement tool. This means that, when carrying out two or more measurements for two or more operating positions of the digital microscope, measurement errors do not add up. Accordingly, when determining a distance accuracy between two operating positions, a potential measurement error when using the photo mask is equally present in both measurements, such that the distance measurement can be carried out in an extremely accurate and reliable manner. The different evaluation scenarios may be different operating positions of the movable table, different distances between the movable table and the digital camera in the z-direction, different operating temperatures, etc..

According to a further embodiment, the method further comprises: determining an offset map between a plurality of operating positions of the movable table and a plurality of expected positions of the movable table. The plurality of expected positions of the movable table may be a plurality of expected positions, as expected from a controlled mechanical positioning of the movable table via a table drive assembly and/or as expected from at least one length measurement system of the movable table. In this way, a positioning accuracy map may be generated for a wide or even full range of operating positions of the movable table. Hence, a quality control check across the wide range of operating positions may be possible. Also, reliability indications for the analysis of specimens / samples in the production mode of the digital microscope may be given. While the offset map has been described with respect to the operating positions of the movable table, it is also possible to determine offset maps for other operating variables of the digital microscope, such as the operating temperature, the distance between the movable table and the digital camera in the z-direction, etc..

Exemplary embodiments of the invention further include a method for controlling a movable table of a digital microscope, comprising: performing a compensated control of the movable table by controlling a table drive assembly, taking into account the offset map, as determined in accordance with a method for optically evaluating an operating accuracy of the digital microscope, as described in any of the embodiments above. The additional features, modifications, and effects, as described above with respect to the method for optically evaluating the operation accuracy of the digital microscope, apply to the method for controlling the movable table of the digital microscope in an analogous manner. While the performing of the compensated control has been described with respect to controlling the movable table, it is also possible to perform a compensated control in other aspects of the digital microscope, such as a temperature-dependent compensated control, a compensated control of the distance between the movable table and the digital camera in the z-direction, etc..

Exemplary embodiments of the invention further include a photo mask for optically evaluating an operating accuracy of a digital microscope, comprising: an orthogonal grid of line structures, the orthogonal grid of line structures forming a two-dimensional array of photo mask subfields; and unique subfield identifiers provided in at least a subset of the two-dimensional array of photo mask subfields. The photo mask may in particular be suitable for carrying out a method for optically evaluating an operating accuracy of a digital microscope, as described in any of the embodiments above. The additional features, modifications, and effects, as described above with respect to the method for optically evaluating the operating accuracy of the digital microscope, apply to the photo mask in an analagous manner.

According to a further embodiment, each of the two-dimensional array of photo mask subfields is provided with a unique subfield identifier.

According to a further embodiment, each of the two-dimensional array of photo mask subfields is provided with a unique subfield identifier.

According to a further embodiment, the photo mask is a chrome-coated photo mask.

According to a further embodiment, the photo mask has production tolerances of less than 100 nm, in particular production tolerances of less than 50 nm.

According to a further embodiment, all photo mask subfields of the two-dimensional array of the photo mask subfields have the same size.

According to a further embodiment, the photo mask subfields have a size of between 100 µm x 100 µm and 300 µm x 300 µm, in particular of between 150 µm x 150 µm and 250 µm x 250 µm.

According to a further embodiment, the line structures of the orthogonal grid of line structures have a width of between 10 µm and 30 µm, in particular a width of between 15 µm and 25 µm, further in particular a width of 20 µm.

According to a further embodiment, the photo mask has a size of between 10 cm x 10 cm and 20 cm x 20 cm, in particular a size of between 12 cm x 12 cm and 16 cm x 16 cm, further in particular a size of 14 cm x 14 cm.

Fig. 1 shows a perspective view of a digital microscope, with a photo mask in accordance with an exemplary embodiment of the invention being placed on the movable table thereof;

Fig. 2 shows a schematic diagram of selected components of the digital microscope of Fig. 1;

Fig. 3 shows a photo mask according to the exemplary embodiment of the invention, which may be used in methods for optically evaluating an operating accuracy of a digital microscope according to exemplary embodiments of the invention;

Fig. 4 shows the photo mask of Fig. 3 in a more schematic, less detailed view; and

Fig. 5 shows examples of unique subfield identifiers, as may be used in photo masks according to exemplary embodiments of the invention;

Fig. 6 shows a schematic diagram of a digital microscope system, as seen from a user perspective, in which a method for optically evaluating an operating accuracy of a digital microscope and/or a method for controlling a movable table of a microscope in accordance with exemplary embodiments of the invention may be implemented.

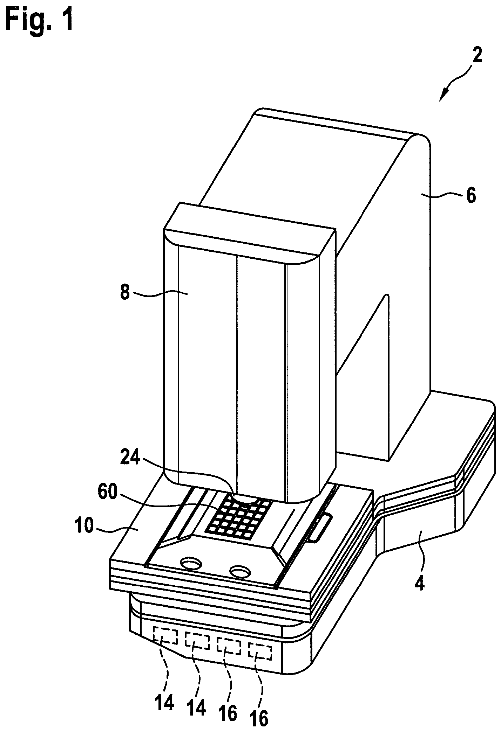

Fig. 1 shows a digital microscope 2 in a perspective, three-dimensional view. The digital microscope 2 has a base 4, which supports the digital microscope 2. The base 4 may be placed on a table for providing a secure stand.

The base 4 comprises an illumination assembly and a table drive assembly, which are blocked from view by a base housing in Fig. 1. A movable table 10 is mounted to the base 4. The movable table 10 is movable with respect to the base 4. In particular, the movable table 10 is movable in two dimensions, referred to as x- and y-directions herein. In operation, the movable table 10 is moved by the table drive assembly in the x- and y-directions.

The movable table 10 has a light transmissive portion, in particular a transparent portion. A specimen / sample may be placed on the light transmissive portion. Also, a photo mask 60 in accordance with an exemplary embodiment of the invention may be placed on the movable table 10. In the operating scenario depicted in Fig. 1, such photo mask 60 is arranged on the light transmissive portion of the movable table 10. In operation, the illumination assembly illuminates the movable table 10 and, thus, the photo mask 60 from the bottom. The plane of the light transmissive portion of the movable table 10 is referred to as the x/y plane of the digital microscope.

The digital microscope 2 further comprises a support arm 6 and a tube assembly 8. The support arm 6 is shaped to support the tube assembly 8, such that the tube assembly 8 hovers over the movable table 10. The tube assembly 8 houses various optical components. In particular, the tube assembly 8 houses a digital camera and an optical system, which in turn has a tube objective and a microscope objective 24 in the exemplary embodiment of Fig. 1. While the digital camera and the tube objective are blocked from view in Fig. 1 by a tube assembly housing, the microscope objective 24 extends therefrom towards the movable table 10.

The tube assembly 8 is movable with respect to the support arm 6 in a moving direction orthogonal to the x/y plane. In other words, the tube assembly 8 is movable in the z-direction of the microscope frame of reference. While this movement is quite limited, it is sufficient to bring a specimen / sample on the movable table 10 in focus with respect to the optical system contained in the tube assembly 8.

In operation, the table drive assembly brings the movable table 10 to desired positions in the x- and y-directions. The table drive assembly may have any kind of suitable actuators, such as two small-scale electric motors for the two directions of movement. While being blocked from view in Fig. 1, the two electric motors are indicated in phantom as two function blocks 14 in Fig. 1. The illumination assembly provides for illumination of the movable table 10 from underneath, and image data of that portion of a specimen / sample or of that portion of the photo mask 60 that is placed in the way of light from the illumination assembly to the digital camera can be captured by the digital camera. Via driving the movable table 10 to various positions, a specimen / sample can be scanned and image data of a whole specimen / sample can be generated. Via driving the movable table 10 to various positions, digital images of different portions of the photo mask 60 can be taken, assuming that the photo mask 60 remains stationary on the movable table 10.

An expected position of the movable table 10 may be derived from the controlled mechanical positioning of the movable table 10 via the two electric motors 14. In addition / as an alternative, an expected position of the movable table 10 may be derived from the measurements taken via two length measurement systems 16, one for each of the x- and y-directions. While being blocked from view in Fig. 1, the two length measurement systems are indicated in phantom as two function blocks 16 in Fig. 1.

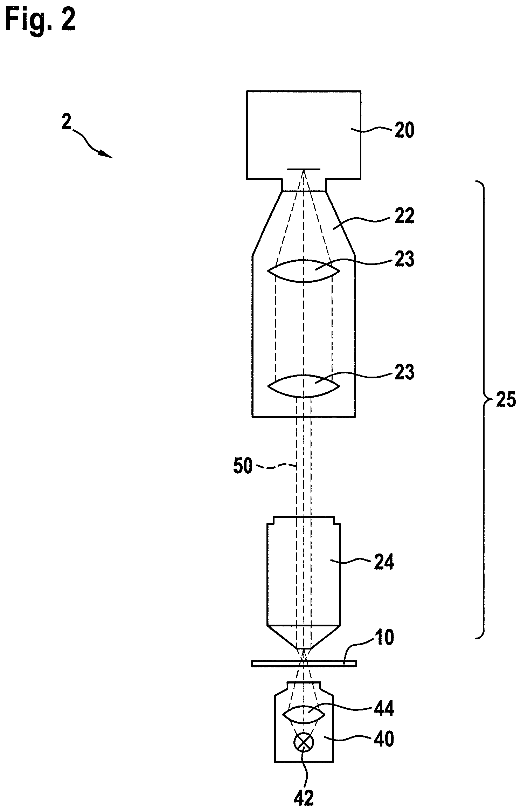

Fig. 2 shows selected components of the digital microscope 2 of Fig. 1 in a schematic view. In particular, Fig. 2 illustrates the components relevant for the illumination of the movable table 10 and the directing of light within the tube assembly 8. As described above, the illumination assembly 40 is arranged below the movable table 10, i.e. below a specimen / sample or below the photo mask 60, and directs lights upwards towards the specimen / sample or photo mask. In the exemplary embodiment of Fig. 2, the illumination assembly 40 has a light source 42 and a collimating lens 44 for directing a large amount of light towards that portion of the specimen / sample or photo mask 60, whose representation is captured. The light source 42 may be a white light source, emitting broad band visible light. It is pointed out that the illumination assembly 40 may have any suitable set-up / design.

The digital microscope 2 has an optical system 25. In the exemplary embodiment of Fig. 2, the optical system 25 has a tube objective 22 and a microscope objective 24. The tube objective 22 has individual tubus lenses 23.

The optical system 25 is provided for achieving a desired magnification of the portion of the specimen / sample of that portion of the photo mask 60 whose representation is captured. The microscope objective 24 and the tube objective 22 jointly provide a magnification of a portion of the specimen / sample or of a portion of the photo mask 60, with the magnified representation of the portion of the specimen / sample or the portion of the photo mask 60 being captured by the digital camera 20. In other words, the microscope objective 24 and the tube objective 22 jointly provide the optical magnification for the image data to be captured. While the magnification may be a product of both the design of the tube objective 22 and the microscope objective 24, it is customary nomenclature to attribute a magnification factor to the microscope objective 24. On the basis of this nomenclature, the microscope objective 24 may be said to be a 5x magnification microscope objective, a 10x magnification microscope objective, a 20x magnification microscope objective, a 40x magnification microscope objective, a 50x magnification microscope objective, a 60x magnification microscope objective or any other suitable magnification factor microscope objective.

The digital microscope 2 further has a digital camera 20. The digital camera 20 has an image sensor and a shutter. It may also have other components customary in the field of digital cameras, which may contribute to the operation of the digital camera capturing image data. The tube objective 22 directs the light, coming from the microscope objective 24, towards the image sensor of the digital camera 20. In this way, a light path 50 from the illumination assembly 40 through the movable table 10, through the microscope objective 24, through the tube objective 22, and to the image sensor of the digital camera 20 is established. The digital camera 20 may be a digital color camera, for example built with CMOS technology. It is pointed out that the digital camera may be any suitable digital camera for capturing the image data.

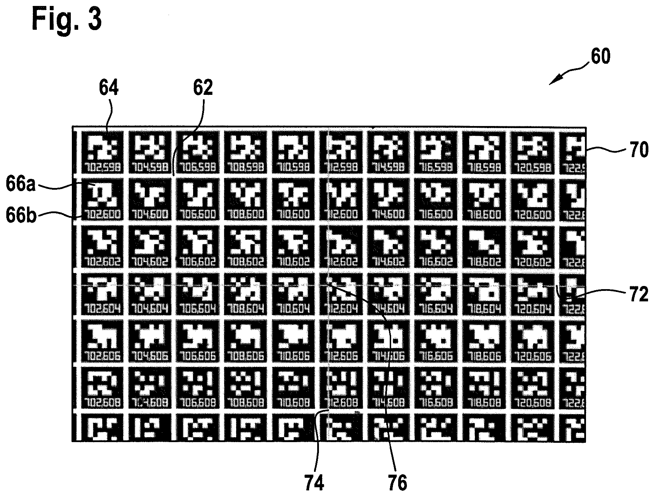

Fig. 3 shows a portion of a photo mask 60 in accordance with an exemplary embodiment of the invention. The photo mask 60 may be used in methods for optically evaluating the operating accuracy of a digital microscope, such as the digital microscope 2 described above with respect to Figs. 1 and 2, in accordance with exemplary embodiments of the invention.

Fig. 3 shows a portion of the photo mask 60 only. In particular, Fig. 3 shows a portion of the photo mask 60 as represented in a digital image 70, taken via the digital camera 20 of the digital microscope 2 depicted in Figs. 1 and 2. The digital image 70 shows a rectangular portion of the photo mask 60, the rectangular portion having a larger width dimension than the height dimension in the exemplary representation of Fig. 3. It is understood that both the portion of the photo mask 60, as represented by the digital image 70, as well as the photo mask 60 in total may have any suitable shape, such as a quadratic shape or a rectangular shape or any other suitable shape.

The photo mask 60 has an orthogonal grid of line structures 62. The orthogonal grid of line structures 62 splits the photo mask 60 into a two-dimensional array of photo mask subfields 64. In the digital image 70 of Fig. 3, 84 photo mask subfields are fully or partly visible. For ease of representation, only one of said photo mask subfields is provided with reference numeral 64 in Fig. 3. It is understood that the photo mask 60 may have a much larger number of photo mask subfields. In a purely exemplary embodiment, the photo mask 60 may have 700 x 700 = 490000 photo mask subfields 64. Each of the photo mask subfields may have an extension of 200 µm x 200 µm, when attributing half of the widths of the line structures around the photo mask subfields to the respective photo mask subfields. As a result, the photo mask 64 may have an area of 14 cm x 14 cm covered with photo mask subfields and the grid of line structures.

In the exemplary embodiment of Fig. 3, the photo mask 60 is provided with two unique subfield identifiers in each of the photo mask subfields 64. In particular, each of the photo mask subfields 64 comprises a matrix bar code identifier 66a and an alphanumerical identifier 66b. The alphanumerical identifier specifies, in human-readable format, the distance of the particular photo mask subfield with respect to the top left corner of the photo mask 60. The photo mask subfield to the top left of the portion of the photo mask 60, as present in the digital image 70 of Fig. 3, is located at a distance of 70200 µm from the leftmost vertical line of the grid of line structures of the photo mask 60 and located at a distance of 59800 µm from the topmost horizontal line of the grid of line structures of the photo mask 60. As the distance to the leftmost vertical line and the topmost horizontal line of the grid of line structures of the photo mask is different for each photo mask subfield, the alphanumerical identifiers 66b are unique. In other words, each photo mask subfield can be unambiguously identified by its unique subfield identifier 66b.

The matrix bar code identifiers 66a are machine-readable, encoded versions of the alphanumerical identifiers 66b. The matrix bar code identifiers 66a may be decoded by a suitable decoding algorithm or via a suitable look-up table or via any other suitable means for extracting the distance information to the left edge and the top edge of the photo mask 60 therefrom.

It is understood that the depicted matrix bar code identifiers 66a and the depicted alphanumerical identifiers 66b are exemplary only and that any other kind of identifiers may be used that allow for an unambiguous identification of the photo mask subfield in question.

The digital image 70 comprises a center location 76. The center location 76 is an example of a specific location within the digital image 70. In order for the center location 76 to be easily discernible, orthogonal center lines 72, 74 are provided in Fig. 3. The orthogonal center lines 72, 74 run through the digital image 70 horizontally and vertically and split the digital image 70 in half, respectively.

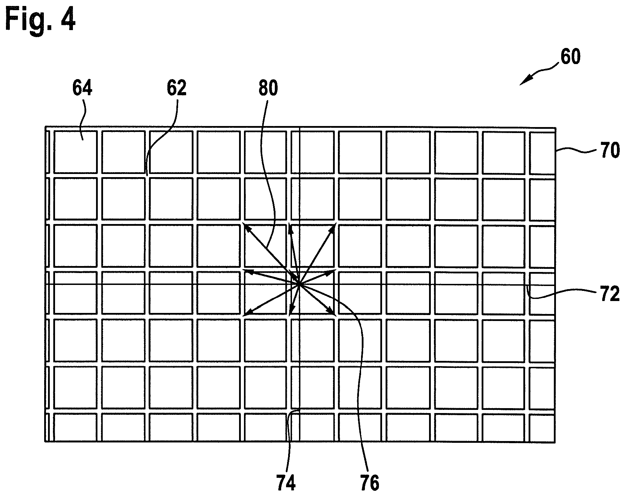

For evaluating the operating accuracy of the digital microscope 2, the absolute position within the photo mask 60 at the center location 76 of the digital image 70 is determined. For ease of readability, the details of said method are described with reference to Fig. 4, which is a schematic, less detailed version of Fig. 3.

Fig. 4 shows the digital image 70 and the portion of the photo mask 60 of Fig. 3 in a more schematic, less detailed view. In particular, while the orthogonal grid of line structures 62 and the two-dimensional array of photo mask subfields 64 are depicted in Fig. 4, the unique subfield identifiers 66a and 66b, as present in Fig. 3, are omitted from Fig. 4 for ease of readability. It is understood that, while not being depicted in Fig. 4, the unique subfield identifiers 66a, 66b are present in the photo mask 60.

As stated above, the method for evaluating the operating accuracy of the digital microscope comprises determining the absolute position of the photo mask 60 at the central location 76 within the digital image 70.

As a first step, the orthogonal grid of line structures 62 is detected by performing edge detection in the digital image 70. After said step, the two-dimensional array of photo mask subfields 64 is known as a set of quadratic frames, as depicted in Fig. 4.

As a second step, the relative position of the orthogonal grid of line structures 62 in the digital image 70 is determined. In other words, it is determined where the orthogonal grid of line structures 62, of which only a portion is shown in the digital image 70 and which extends beyond the depicted portion, when considering the total extension of the photo mask 60, is located within the digital image 70. The relative position of the orthogonal grid of line structures 62 in the digital image 70 may be expressed in various different ways, such as via the spacing between the left-most vertical line and the left edge of the digital image 70 and via the spacing between the bottom-most line and the bottom edge of the digital image 70, such as by determining where the central location 76 is located with respect to the quadratic frame of that photo mask subfield where the central location 76 is present, etc.. It is understood that the relative position of the orthogonal grid of line structures 62 in the digital image 70 may be determined in many different ways by analyzing a wide range of characteristics of the orthogonal grid of line structures 62 in the digital image 70. With the orthogonal grid of line structures 62 being a highly regular structure, the relative position may be generally determined at any portion of the digital image 70.

In the exemplary embodiment of Fig. 4, said determining of the relative position of the orthogonal grid of line structures 62 in the digital image 70 is carried out as follows. The central location 76 of the digital image 70 is located in a photo mask subfield that is considered herein below as the central photo mask subfield. After having determined the central photo mask subfield, the relative position of the central location 76 of the digital image 70 is determined with respect to the top left corners of the central photo mask subfield and those eight photo mask subfields surrounding the central photo mask subfield. The top left corners of the photo mask subfields are defined as those locations where the respective centers of the vertical lines and the respective centers of the horizontal lines of the orthogonal grid of line structures intersect. By looking at the centers of the vertical / horizontal lines, the centers between edges detected by two edge detection operations for the left and right / top and bottom flanks of the vertical / horizontal lines may be used. A high detection accuracy may thus be achieved for the centers of the vertical and horizontal lines of the orthogonal grid of lins structures.

By above described method, nine relative positions between the central location 76 and nine specific points of the orthogonal grid of line structures 62 are determined. Said nine determinations of relative positions are indicated in Fig. 4 via the provision of nine arrows 80, extending from the central location 76 of the digital image 70 to the described nine top left corners of nine photo mask subfields. From the set-up of the photo mask 60, the distances between the nine top left corners of the nine photo mask subfields are known. Accordingly, by determining nine relative positions between the central location 76 of the digital image 70 and the respective top left corners of the photo mask subfields, measurement redundancy may be achieved and measurement errors may be detected and/or compensated for. As a result of this operation, a highly accurate statement can be made with respect to the relative position of the central location 76 of the digital image 70 within the central photo mask subfield. This statement is an exemplary expression for the relative position of the orthogonal grid of line structures 62 in the digital image 70.

As a third step, at least one unique subfield identifier, as depicted in Fig. 3, is analyzed in the digital image 70. For example, the unique subfield identifier in the central photo mask subfield may be analyzed. From said analysis, the position of the central photo mask subfield with respect to the top left corner of the photo mask 60 as a whole may be determined.

As a fourth step, said position with respect to the top left corner of the photo mask 60 as a whole and said relative position between the central location 76 of the digital image 70 and the top left corner of the central photo mask subfield are combined to determine an absolute position within the photo mask for the central location 76 of the digital image 70. In this way, it can be determined in a highly accurate and highly reliable manner which absolute position within the photo mask 60 is present at the central location 76 of the digital image 70.

On the basis of said knowledge, various determinations with respect to the operating accuracy of the digital microscope 2, as described above with respect to Figs. 1 and 2, may be made. For example, from said determination of the absolute position within the photo mask at the central location 76 of the digital image, it can be determined whether the movable table 10 of the digital microscope 2 is at the position where it is expected.

Various aspects of the operating accuracy of the digital microscope may be determined from the digital image 70 or from a plurality of digital images, taken for different evaluation scenarios. For example, the extension of particular photo mask subfield may be determined and, on the basis of said extension and the knowledge of the pixel density of the digital camera, a magnification accuracy of the digital microscope may be determined. Conversely, on the basis of the extension of a particular photo mask subfield and the knowledge of the magnification of the digital microscope, a pixel density of the digital camera of the digital microscope may be determined. In another example, when comparing the extensions of different photo mask subfields in different portions of the digital image 70, a distortion of the digital microscope may be evaluated. Yet further, the operating temperature of the digital microscope may be changed, and different evaluations at different operating temperatures may lead to evaluating the temperature sensitivity of the digital microscope. Further, multiple evaluation operations may be carried out for different distances between the movable table and the digital camera in the z-direction and, on the basis thereof, the distance accuracy of the digital microscope in said dimension may be determined.

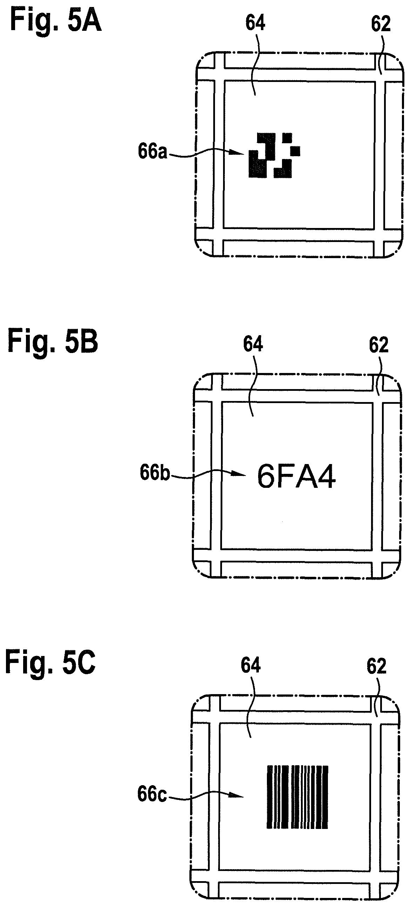

Fig. 5 illustrates different unique subfield identifiers, as may be used for the photo mask subfields 64 of photo masks in accordance with exemplary embodiments of the invention. For said purpose, each of Figs. 5A, 5B, and 5C illustrates a single photo mask subfield 64, framed by a portion of the orthogonal grid of line structures 62. Fig. 5A illustrates a matrix bar code identifier 66a, Fig. 5B illustrates an alphanumerical identifier 66b, and Fig. 5C illustrates a one-dimensional bar code 66c. All of these subfield identifiers are machine-readable and may be provided in such a way that unique identifiers are distributed among the photo mask subfields 64 of the two-dimensional array of photo mask subfields of the photo mask 60.

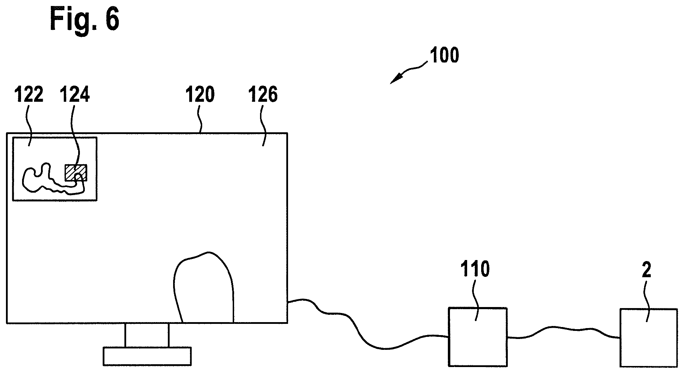

Fig. 6 shows a schematic diagram of a digital microscope system 100, which may may be used for implementing a method for evaluating an operating accuracy of a digital microscope in accordance with exemplary embodiments of the invention and/or for implementing a method for controlling a movable table of a microscope in accordance with exemplary embodiments of the invention. The digital microscope system 100 comprises a digital microscope 2. The digital microscope 2 may be a digital microscope 2 having the mechanical set-up as described with respect to Fig. 1 above and the optical set-up as described with respect to Fig. 2 above. With respect to Fig. 6, the focus is on the user perspective and the user interaction with the digital microscope system 100.

The digital microscope system 100 further comprises a computer 110, coupled to the digital microscope 2, and a screen 120, coupled to the computer 110. The computer 110 may be any kind of suitable processing device that provides for the interaction between the screen 120 and the digital microscope 2 in a suitable manner. The computer 110 may for example be a standard personal computer, embodied as a desktop computer or a laptop. The processing capacity, exemplarily provided by the computer 110 in the exemplary embodiment of Fig. 6, may also be embedded into the digital microscope 2 or into the screen 120. The screen 120 may for example be part of a tablet or a smartphone, having both the screen functionality and the processing functionality for interfacing directly with the digital microscope 2. It is also possible that the processing capacity, exemplarily provided by the computer 110 in the exemplary embodiment of Fig. 6, may be provided on a remote processing device, such as a remote server as part of a cloud-based system.

The screen 120 is the control interface for the user of the digital microscope system 100. In the exemplary embodiment of Fig. 6, the screen 120 is a touch screen, so that the screen 120 provides both user input functionality and image output functionality. The user may control the whole operation of the digital microscope system 100 via the touch screen 120. However, it is also possible that other input devices are provided in addition / as an alternative to the touch screen 120. For example, a keyboard and/or a mouse and/or any other suitable input device may be provided for the user to control the digital microscope system 100. It is also possible that multiple screens are provided for the output of images. It is further possible that images are output to other entities. For example, images may be saved to a hard drive or other data storage medium in file format.

The screen 120 may show an overview 122 of a specimen / sample that is present on the movable table of the digital microscope 2. The screen may also be configured to receive a user selection regarding an area of interest 124 of the specimen / sample and may interact with the computer 110 and the digital microscope 2, in order to provide an enlarged version of the area of interest 124 in a full screen window 126.

When a photo mask, as described above, is placed on the movable table of the digital microscope 2, a user and/or an automated test routine, implemented on the computer 110, may carry out a method for evaluating an operating accuracy of the digital microscope 2, as described above, in particular as described above with respect to Figs. 3 and 4. Said method may in particular be carried out for multiple evaluation scenarios, in order to obtain a comprehensive analysis of the operating accuracy of the digital microscope 2. For example, when evaluating the positioning accuracy of the movable table of the digital microscope 2, an offset map between actual operating positions, as measured via the photo mask, and expected positions of the movable table, as expected from a control of the digital microscope via the electric motors 14 and/or as expected from readings of the length measurement systems 16, may be generated.

In an ensuing production operation, where specimens / samples are analyzed with the digital microscope system 100, such offset map may be used for a compensated control of the digital microscope 2. In particular, the offset map may be used for driving the movable table to positions that have been verified as actual operating positions via the photo mask. For this purpose, the expected positions, as expected from the control of the digital microscope via the electric motors 14, may be modified according to the offset map, in order to provide modified control commands to the electric motors 14.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed, but that the invention will include all embodiments falling within the scope of the appended claims.

## Claims

1. Method for optically evaluating an operating accuracy of a digital microscope (2), the method comprising:
placing a photo mask (60) on a movable table (10) of the digital microscope (2), the photo mask (60) comprising an orthogonal grid of line structures (62), wherein the orthogonal grid of line structures (62) forms a two-dimensional array of photo mask subfields (64) and wherein at least a subset of the two-dimensional array of photo mask subfields (64) are provided with unique subfield identifiers (66a, 66b, 66c);
taking a digital image (70) of a portion of the photo mask (60) with a digital camera (20) of the digital microscope (2);
determining a relative position of the orthogonal grid of line structures (62) in the digital image (70) of the portion of the photo mask (60);
analyzing at least one unique subfield identifier in the digital image (70) of the portion of the photo mask (60); and
on the basis of said relative position of the orthogonal grid of line structures (62) and said at least one unique subfield identifier, analyzed in the digital image (70) of the portion of the photo mask (60), determining an absolute position within the photo mask (60) for a specific location (76) within the digital image (70);
wherein at least the steps of taking a digital image (70) of a portion of the photo mask (60), determining a relative position of the orthogonal grid of line structures (62), analyzing at least one unique subfield identifier (66a, 66b, 66c), and determining an absolute position within the photo mask (60) for a specific location (76) within the digital image (70) are carried out in a plurality of iterations for a plurality of different evaluation scenarios, wherein the plurality of different evaluation scenarios are different operating positions of the movable table; and
wherein the method comprises evaluating a positioning accuracy of the movable table (10) in an x/y plane using respective absolute positions within the photo mask (60), determined in the plurality of different evaluation scenarios.

2. Method according to claim 1, wherein each of the two-dimensional array of photo mask subfields (64) is provided with a unique subfield identifier (66a, 66b, 66c).

3. Method according to claim 1 or 2, wherein the unique subfield identifiers (66a, 66b, 66c) comprise one-dimensional bar code identifiers (66c) and/or matrix bar code identifiers (66a) and/or alphanumerical identifiers (66b).

4. Method according to any of the preceding claims, wherein said determining of the relative position of the orthogonal grid of line structures (62) comprises edge detection with respect to at least part of the orthogonal grid of line structures (62) in the digital image (70) of the portion of the photo mask (60).

5. Method according to any of the preceding claims, wherein said determining of the relative position of the orthogonal grid of line structures (62) comprises sub-pixel edge detection in the digital image (70) of the portion of the photo mask (60).

6. Method according to any of the preceding claims, wherein said determining of the relative position of the orthogonal grid of line structures (62) comprises analyzing a section of the digital image (70) that contains 1 photo mask subfield or 9 photo mask subfields or 25 photo mask subfields or 49 photo mask subfields or 81 photo mask subfields, wherein said determining of the relative position of the orthogonal grid of line structures (62) in particular comprises analyzing a section of the digital image that contains a 1x1 window of photo mask subfields or a 3x3 window of photo mask subfields or a 5x5 window of photo mask subfields or a 7x7 window of photo mask subfields or a 9x9 window of photo mask subfields.

7. Method according to any of the preceding claims, wherein the photo mask (60) is a chrome-coated photo mask.

8. Method according to any of the preceding claims, wherein the photo mask (60) has production tolerances of less than 100 nm, in particular production tolerances of less than 50 nm.

9. Method according to any of the preceding claims, wherein the method further comprises using said absolute position within the photo mask (60), determined for the specific location (76) within the digital image (70), for at least one of:
evaluating a distance accuracy between the movable table (10) and the digital camera (20) in a z-direction;
evaluating a position accuracy of an optical z-axis from the movable table (10) to the digital camera (20) with respect to the x/y plane;
evaluating a pixel density of the digital camera (20);
evaluating a magnification accuracy of the digital microscope (2);
evaluating a temperature sensitivity of the digital microscope (2);
evaluating a distortion of the digital microscope (2).

10. Method according to any of the preceding claims, further comprising:
determining an operating position of the movable table (10), using said absolute position within the photo mask (60), determined for the specific location (76) within the digital image (70), and comparing said operating position with an expected position of the movable table (10), as expected from a controlled mechanical positioning of the movable table (10) via a table drive assembly (14) and/or as expected from at least one length measurement system (16) of the movable table (10).

11. Method according to any of the preceding claims, further comprising:
determining an offset map between a plurality of operating positions of the movable table (10) and a plurality of expected positions of the movable table (10).

12. Method for controlling a movable table (10) of a digital microscope (2), comprising:
performing a compensated control of the movable table (10) by controlling a table drive assembly (14), taking into account the offset map determined in accordance with claim 11.

13. Photo mask (60) for use in a method for optically evaluating an operating accuracy of a digital microscope (2) according to any of claims 1 to 11,
wherein the photo mask (60) has light transmissive portions and light blocking portions,
wherein the light transmissive portions and the light blocking portions form:
an orthogonal grid of line structures (62), the orthogonal grid of line structures (62) forming a two-dimensional array of photo mask subfields (64); and
unique subfield identifiers (66a, 66b, 66c) provided in at least a subset of the two-dimensional array of photo mask subfields (64).

14. Photo mask (60) according to claim 13,
wherein the photo mask (60) is a chrome-coated photo mask; and/or
wherein the photo mask (60) has production tolerances of less than 100 nm, in particular production tolerances of less than 50 nm.

## Patentansprüche

1. Verfahren zur optischen Auswertung der Betriebsgenauigkeit eines digitalen Mikroskops (2), wobei das Verfahren aufweist:
Platzieren einer Fotomaske (60) auf einem beweglichen Tisch (10) des digitalen Mikroskops (2), wobei die Fotomaske (60) ein orthogonales Gitter von Linienstrukturen (62) aufweist, wobei das orthogonale Gitter von Linienstrukturen (62) eine zweidimensionale Anordnung von Fotomaskenteilfeldern (64) bildet und wobei mindestens eine Teilmenge der zweidimensionalen Anordnung von Fotomaskenteilfeldern (64) mit eindeutigen Teilfeldkennungen (66a, 66b, 66c) versehen ist;
Aufnehmen eines digitalen Bildes (70) eines Bereichs der Fotomaske (60) mit einer Digitalkamera (20) des digitalen Mikroskops (2);
Bestimmen einer relativen Position des orthogonalen Gitters von Linienstrukturen (62) in dem digitalen Bild (70) des Bereichs der Fotomaske (60);
Analysieren mindestens einer eindeutigen Teilfeldkennung in dem digitalen Bild (70) des Bereichs der Fotomaske (60); und
auf Grundlage der relativen Position des orthogonalen Gitters von Linienstrukturen (62) und der mindestens einen eindeutigen Teilfeldkennung, die in dem digitalen Bild (70) des Bereichs der Fotomaske (60) analysiert wird, Bestimmen einer absoluten Position innerhalb der Fotomaske (60) für eine spezielle Stelle (76) innerhalb des digitalen Bildes (70);
wobei zumindest die Schritte des Aufnehmens eines digitalen Bildes (70) eines Bereichs der Fotomaske (60), des Bestimmens einer relativen Position des orthogonalen Gitters von Linienstrukturen (62), des Analysierens zumindest einer eindeutigen Teilfeldkennung (66a, 66b, 66c) und des Bestimmens einer absoluten Position innerhalb der Fotomaske (60) für eine spezielle Stelle (76) innerhalb des digitalen Bildes (70) in einer Mehrzahl von Iterationen für eine Mehrzahl von unterschiedlichen Auswertungsszenarien ausgeführt werden, wobei die Mehrzahl von unterschiedlichen Auswertungsszenarien unterschiedliche Betriebspositionen des beweglichen Tisches sind; und
wobei das Verfahren das Auswerten einer Positioniergenauigkeit des beweglichen Tisches (10) in einer x/y-Ebene unter Verwendung entsprechender absoluter Positionen innerhalb der Fotomaske (60) aufweist, die in der Mehrzahl von unterschiedlichen Auswertungsszenarien bestimmt werden.

2. Verfahren nach Anspruch 1, wobei jede der zweidimensionalen Anordnung von Fotomaskenteilfeldern (64) mit einer eindeutigen Teilfeldkennung (66a, 66b, 66c) versehen ist.

3. Verfahren nach Anspruch 1 oder 2, wobei die eindeutigen Teilfeldkennungen (66a, 66b, 66c) eindimensionale Strichcodekennungen (66c) und/ oder Matrixstrichcodekennungen (66a) und/oder alphanumerische Kennungen (66b) aufweisen.

4. Verfahren nach einem der vorhergehenden Ansprüche, wobei das Bestimmen der relativen Position des orthogonalen Gitters von Linienstrukturen (62) eine Kantenerkennung in Bezug auf mindestens einen Teil des orthogonalen Gitters von Linienstrukturen (62) in dem digitalen Bild (70) des Bereichs der Fotomaske (60) aufweist.

5. Verfahren nach einem der vorhergehenden Ansprüche, wobei das Bestimmen der relativen Position des orthogonalen Gitters von Linienstrukturen (62) eine Subpixel-Kantenerkennung in dem digitalen Bild (70) des Bereichs der Fotomaske (60) aufweist.

6. Verfahren nach einem der vorhergehenden Ansprüche, wobei das Bestimmen der relativen Position des orthogonalen Gitters von Linienstrukturen (62) das Analysieren eines Ausschnitts des digitalen Bildes (70) aufweist, der 1 Fotomaskenteilfeld oder 9 Fotomaskenteilfelder oder 25 Fotomaskenteilfelder oder 49 Fotomaskenteilfelder oder 81 Fotomaskenteilfelder enthält, wobei das Bestimmen der relativen Position des orthogonalen Gitters von Linienstrukturen (62) insbesondere das Analysieren eines Ausschnitts des digitalen Bildes aufweist, der ein 1x1-Fenster von Fotomaskenteilfeldern oder ein 3x3-Fenster von Fotomaskenteilfeldern oder ein 5x5-Fenster von Fotomaskenteilfeldern oder ein 7x7-Fenster von Fotomaskenteilfeldern oder ein 9x9-Fenster von Fotomaskenteilfeldern enthält.

7. Verfahren nach einem der vorhergehenden Ansprüche, wobei die Fotomaske (60) eine chrombeschichtete Fotomaske ist.

8. Verfahren nach einem der vorhergehenden Ansprüche, wobei die Fotomaske (60) Fertigungstoleranzen von weniger als 100 nm, insbesondere Fertigungstoleranzen von weniger als 50 nm, hat.

9. Verfahren nach einem der vorhergehenden Ansprüche, wobei das Verfahren ferner das Verwenden der absoluten Position innerhalb der Fotomaske (60), die für die spezielle Stelle (76) innerhalb des digitalen Bildes (70) bestimmt wurde, für mindestens eines aufweist von:
Auswerten der Abstandsgenauigkeit zwischen dem beweglichen Tisch (10) und der Digitalkamera (20) in der z-Richtung;
Auswerten der Positionsgenauigkeit einer optischen z-Achse von dem beweglichen Tisch (10) zu der Digitalkamera (20) in Bezug auf die x/y-Ebene;
Auswerten der Pixeldichte der Digitalkamera (20);
Auswerten der Vergrößerungsgenauigkeit des digitalen Mikroskops (2);
Auswerten der Temperaturempfindlichkeit des digitalen Mikroskops (2);
Auswerten einer Verzerrung des digitalen Mikroskops (2).

10. Verfahren nach einem der vorhergehenden Ansprüche, ferner aufweisend:
Bestimmen einer Betriebsposition des beweglichen Tisches (10) unter Verwendung der absoluten Position innerhalb der Fotomaske (60), die für die spezielle Stelle (76) innerhalb des digitalen Bildes (70) bestimmt wurde, und Vergleichen der Betriebsposition mit einer erwarteten Position des beweglichen Tisches (10), wie sie von einer gesteuerten mechanischen Positionierung des beweglichen Tisches (10) über eine Tischantriebsanordnung (14) erwartet wird und/oder wie sie von mindestens einem Längenmesssystem (16) des beweglichen Tisches (10) erwartet wird.

11. Verfahren nach einem der vorhergehenden Ansprüche, ferner aufweisend:
Bestimmen einer Versatzkarte zwischen einer Mehrzahl von Betriebspositionen des beweglichen Tisches (10) und einer Mehrzahl von erwarteten Positionen des beweglichen Tisches (10).

12. Verfahren zur Steuerung eines beweglichen Tisches (10) eines digitalen Mikroskops (2), aufweisend:
Durchführen einer kompensierten Steuerung des beweglichen Tisches (10) durch Steuerung einer Tischantriebsanordnung (14) unter Berücksichtigung der gemäß Anspruch 11 bestimmten Versatzkarte.

13. Fotomaske (60) zur Verwendung in einem Verfahren zur optischen Auswertung der Betriebsgenauigkeit eines digitalen Mikroskops (2) nach einem der Ansprüche 1 bis 11,
wobei die Fotomaske (60) lichtdurchlässige Bereiche und lichtblockierende Bereiche aufweist,
wobei die lichtdurchlässigen Bereiche und die lichtundurchlässigen Bereiche bilden:
ein orthogonales Gitter von Linienstrukturen (62), wobei das orthogonale Gitter von Linienstrukturen (62) eine zweidimensionale Anordnung von Fotomaskenteilfeldern (64) bildet; und
eindeutige Teilfeldkennungen (66a, 66b, 66c), die in mindestens einer Teilmenge der zweidimensionalen Anordnung von Fotomaskenteilfeldern (64) enthalten sind.

14. Fotomaske (60) nach Anspruch 13,
wobei die Fotomaske (60) eine chrombeschichtete Fotomaske ist;
und/oder
wobei die Fotomaske (60) Fertigungstoleranzen von weniger als 100 nm, insbesondere Fertigungstoleranzen von weniger als 50 nm, hat.

## Revendications

1. Méthode pour évaluer optiquement une précision opérationnelle d'un microscope numérique (2), la méthode comprenant :
placer un masque photographique (60) sur une table mobile (10) du microscope numérique (2), le masque photographique (60) comprenant une grille orthogonale de structures de lignes (62), où la grille orthogonale de structures de lignes (62) forme un tableau bidimensionnel de sous-champs de masque photographique (64) et où au moins un sous-ensemble du tableau bidimensionnel de sous-champs de masque photographique (64) est pourvu d'identifiants de sous-champs uniques (66a, 66b, 66c) ;
prendre une image numérique (70) d'une partie du masque photographique (60) avec une caméra numérique (20) du microscope numérique (2) ;
déterminer une position relative de la grille orthogonale de structures de lignes (62) dans l'image numérique (70) de la partie du masque photographique (60) ;
analyser au moins un identifiant de sous-champ unique dans l'image numérique (70) de la partie du masque photographique (60) ; et
sur la base de ladite position relative de la grille orthogonale de structures de lignes (62) et dudit au moins un identifiant de sous-champ unique, analysé dans l'image numérique (70) de la partie du masque photographique (60), déterminer une position absolue dans le masque photographique (60) pour un emplacement spécifique (76) dans l'image numérique (70) ;
où au moins les étapes de prise d'une image numérique (70) d'une partie du masque photographique (60), de détermination d'une position relative de la grille orthogonale de structures de lignes (62), d'analyse d'au moins un identifiant de sous-champ unique (66a, 66b, 66c), et de détermination d'une position absolue dans le masque photographique (60) pour un emplacement spécifique (76) dans l'image numérique (70) sont effectuées en plusieurs itérations pour une pluralité de scénarios d'évaluation différents, où la pluralité de scénarios d'évaluation différents sont des positions opérationnelles différentes de la table mobile ; et
où la méthode comprend l'évaluation d'une précision de positionnement de la table mobile (10) dans un plan x/y en utilisant les positions absolues respectives dans le masque photographique (60), déterminées dans la pluralité de scénarios d'évaluation différents.

2. Méthode selon la revendication 1, où chacun du tableau bidimensionnel de sous-champs de masque photographique (64) est pourvu d'un identifiant de sous-champ unique (66a, 66b, 66c).

3. Méthode selon la revendication 1 ou 2, où les identifiants de sous-champs uniques (66a, 66b, 66c) comprennent des identifiants de code-barres unidimensionnels (66c) et/ou des identifiants de code-barres matriciels (66a) et/ou des identifiants alphanumériques (66b).

4. Méthode selon l'une quelconque des revendications précédentes, où ladite détermination de la position relative de la grille orthogonale de structures de lignes (62) comprend la détection des bords par rapport à au moins une partie de la grille orthogonale de structures de lignes (62) dans l'image numérique (70) de la partie du masque photographique (60).

5. Méthode selon l'une quelconque des revendications précédentes, où ladite détermination de la position relative de la grille orthogonale de structures de lignes (62) comprend la détection des bords à sous-pixel dans l'image numérique (70) de la partie du masque photographique (60).

6. Méthode selon l'une quelconque des revendications précédentes, où ladite détermination de la position relative de la grille orthogonale de structures de lignes (62) comprend l'analyse d'une section de l'image numérique (70) qui contient 1 sous-champ de masque photographique ou 9 sous-champs de masque photographique ou 25 sous-champs de masque photographique ou 49 sous-champs de masque photographique ou 81 sous-champs de masque photographique, où ladite détermination de la position relative de la grille orthogonale de structures de lignes (62) comprend en particulier l'analyse d'une section de l'image numérique qui contient une fenêtre de sous-champs de masque photographique de 1x1 ou une fenêtre de sous-champs de masque photographique de 3x3 ou une fenêtre de sous-champs de masque photographique de 5x5 ou une fenêtre de sous-champs de masque photographique de 7x7 ou une fenêtre de sous-champs de masque photographique de 9x9.

7. Méthode selon l'une quelconque des revendications précédentes, où le masque photographique (60) est un masque photographique revêtu de chrome.

8. Méthode selon l'une quelconque des revendications précédentes, où le masque photographique (60) a des tolérances de production inférieures à 100 nm, en particulier des tolérances de production inférieures à 50 nm.

9. Méthode selon l'une quelconque des revendications précédentes, où la méthode comprend en outre l'utilisation de ladite position absolue dans le masque photographique (60), déterminée pour l'emplacement spécifique (76) dans l'image numérique (70), pour au moins une des évaluations suivantes :
évaluer une précision de distance entre la table mobile (10) et la caméra numérique (20) dans une direction z ;
évaluer une précision de position d'un axe optique z de la table mobile (10) à la caméra numérique (20) par rapport au plan x/y ;
évaluer une densité de pixels de la caméra numérique (20) ;
évaluer une précision de grossissement du microscope numérique (2) ;
évaluer une sensibilité à la température du microscope numérique (2) ;
évaluer une distorsion du microscope numérique (2).

10. Méthode selon l'une quelconque des revendications précédentes, comprenant en outre :
déterminer une position opérationnelle de la table mobile (10), en utilisant ladite position absolue dans le masque photographique (60), déterminée pour l'emplacement spécifique (76) dans l'image numérique (70), et comparer ladite position opérationnelle avec une position attendue de la table mobile (10), comme attendu d'un positionnement mécanique contrôlé de la table mobile (10) via un ensemble d'entraînement de table (14) et/ou comme attendu d'au moins un système de mesure de longueur (16) de la table mobile (10).

11. Méthode selon l'une quelconque des revendications précédentes, comprenant en outre :
déterminer une carte de décalage entre une pluralité de positions opérationnelle de la table mobile (10) et une pluralité de positions attendues de la table mobile (10).

12. Méthode pour contrôler une table mobile (10) d'un microscope numérique (2), comprenant :
effectuer un contrôle compensé de la table mobile (10) en contrôlant un ensemble d'entraînement de table (14), en tenant compte de la carte de décalage déterminée conformément à la revendication 11.

13. Masque photographique (60) pour utilisation dans une méthode pour évaluer optiquement une précision opérationnelle d'un microscope numérique (2) selon l'une quelconque des revendications 1 à 11,
où le masque photographique (60) a des parties transmissives de lumière et des parties bloquant la lumière,
où les parties transmissives de lumière et les parties bloquant la lumière forment : une grille orthogonale de structures de lignes (62), la grille orthogonale de structures de lignes (62) formant un tableau bidimensionnel de sous-champs de masque photographique (64) ; et des identifiants de sous-champs uniques (66a, 66b, 66c) fournis dans au moins un sous-ensemble du tableau bidimensionnel de sous-champs de masque photographique (64).

14. Masque photographique (60) selon la revendication 13,
où le masque photographique (60) est un masque photographique revêtu de chrome ; et/ou
où le masque photographique (60) a des tolérances de production inférieures à 100 nm, en particulier des tolérances de production inférieures à 50 nm.
